# EUROPÄISCHE PATENTSCHRIFT

(11) **EP 3 661 821 B1**
(45) Veröffentlichungstag und Bekanntmachung des Hinweises auf die Patenterteilung: **08.09.2021**
(21) Anmeldenummer: 18746912.7
(22) Anmeldetag: 26.07.2018
(51) Int. Cl.: B60T 13/16

(54) **HYDRAULISCHES BREMSSYSTEM MIT ELEKTRONISCHER REGELEINHEIT SOWIE VERFAHREN ZUM BETRIEB DESSELBEN**
HYDRAULIC BRAKE SYSTEM WITH ELECTRONIC CONTROLLER AND METHOD OF OPERATING IT
SYSTÈME HYDRAULIQUE DE FREINS AVER CONTRÔLEUR ÉLECTRONIQUE ET MÉTHODE DE FONCTIONNEMENT DU MÊME

(30) Priorität: 01.08.2017 DE 102017117399
(43) Veröffentlichungstag der Anmeldung: 10.06.2020
(73) Patentinhaber: KNORR-BREMSE Systeme für Schienenfahrzeuge GmbH, 80809 München (DE)
(72) Erfinder: MÜLLER, Claus, 82515 Wolfratshausen (DE); LOEBNER, Reinhard, 81829 München (DE); CLEV, Marcus, 81476 München (DE); ELWISCHGER, Fabian, 85399 Halbergmoos (DE)
(86) Internationale Anmeldenummer: PCT/EP2018/070304
(87) Internationale Veröffentlichungsnummer: WO 2019/025282

(56) Entgegenhaltungen:
- CN-U- 206 049 646
- DE-A1-102007 019 441
- DE-A1-102007 028 665
- DE-T5-112012 006 194

## Beschreibung

Die Erfindung betrifft ein hydraulisches Bremssystem zum Bremsen eines Fahrzeugrades nach Maßgabe einer Bremsdruckregelung, umfassend eine von einem Elektromotor angetriebene Hydraulikpumpe zur hydraulischen Druckerzeugung, eine elektronische Regeleinheit zur Ermittlung mindestens eines Stellwerts zum Ausgleich einer Regelabweichung, ausgehend von einem gemessenen Ist-Bremsdruck im Vergleich zu einer Soll-Druckvorgabe, welche mindestens ein Stellglied zur Druckerhöhung und/oder Druckverminderung des Ist-Bremsdrucks in Anpassung zur Soll-Druckvorgabe ansteuert. Ferner betrifft die Erfindung auch ein Verfahren zum Bremsen eines Fahrzeugrades nach Maßgabe dieser Bremsdruckregelung sowie ein sich hierauf beziehendes Computerprogrammprodukt.

Das Einsatzgebiet der Erfindung erstreckt sich vornehmlich auf sogenannte Light Rail Vehicles (LRV), beispielsweise Straßenbahnen, welche üblicherweise mit hydraulisch betätigten Reibungsbremsen ausgerüstet sind. Solche hydraulisch betätigten Reibungsbremsen lassen sich wegen der wesentlich höheren Drücke des Arbeitsmediums viel kompakter als pneumatische Bremsausrüstungen ausführen. Derart kompakte Komponenten ermöglichen wiederum einen hohen Niederfluranteil des Fahrzeugs.

Bei den hier interessierenden hydraulisch betätigten Reibungsbremsen wird die Bremskraft über eine Reibpaarung aus Belag und Bremsscheibe aufgebracht. Die hierfür erforderlichen Anpresskräfte des Belages an die Bremsscheibe werden über einen mit einem hydraulischen Druck beaufschlagten Kolben erzeugt. Werden Einflüsse aus Reibwertschwankungen, nichtlinearen Federkennlinien und variierenden mechanischen Wirkungsgraden vernachlässigt, ist die sich ergebende Bremskraft im Falle von aktiven Bremskrafterzeugern direkt proportional zum anliegenden hydraulischen Druck. Im Falle von federkraftbetätigten und hydraulisch zu lösenden passiven Bremskrafterzeugern besteht eine indirekte Proportionalität zum anliegenden hydraulischen Druck.

Im Allgemeinen soll die Bremskraft hinsichtlich des Betrages und der Änderungsrate (Gradient) möglichst frei und genau einstellbar sein. Ein Bedarf nach hohen Druckgradienten entsteht insbesondere bei durch niedrigen Kraftschluss hervorgerufenem Gleiten des Rades/Radsatzes sowie auch beim Anfahren des Fahrzeuges mit gleichzeitiger Aufschaltung der Anfahrzugkraft, was eine schnelle Reaktion der Bremse erfordert.

Aus der DE 10 2016 219 314 A1 geht ein hydraulisches Bremssystem hervor, bei welchem zwei von einem Elektromotor angetriebene Hydraulikpumpen den Bremsdruck für jeweils zwei zugeordnete Scheibenbremsen generieren. Beide hier zugeordneten hydraulischen Kreise enthalten jeweils zwei elektromagnetisch ansteuerbare Ventile, von denen ein Ventil für eine Druckerhöhung und das andere Ventil für eine Druckverminderung des Bremsdrucks vorgesehen ist. Die zugeordnete Hydraulikpumpe pumpt die angesaugte Hydraulikflüssigkeit zur Speisedruckversorgung unter anderem auch an einen Speisedruckeingang des für die Druckerhöhung im Rahmen der Regelventilanordnung vorgesehenen elektromagnetischen Ventils. Eine elektronische Steuereinheit (ECU) übernimmt die Ansteuerung der beiden elektromagnetischen Ventile zur Erzeugung des Bremsdrucks entsprechend der Soll-Druckvorgabe.

In der DE 10 2007 028665 A1 ist eine Bremssteuerungsvorrichtung offenbart, welche die Bremskraft durch Regulieren jedes einzelnen Radbremszylinderdrucks steuert beziehungsweise regelt.

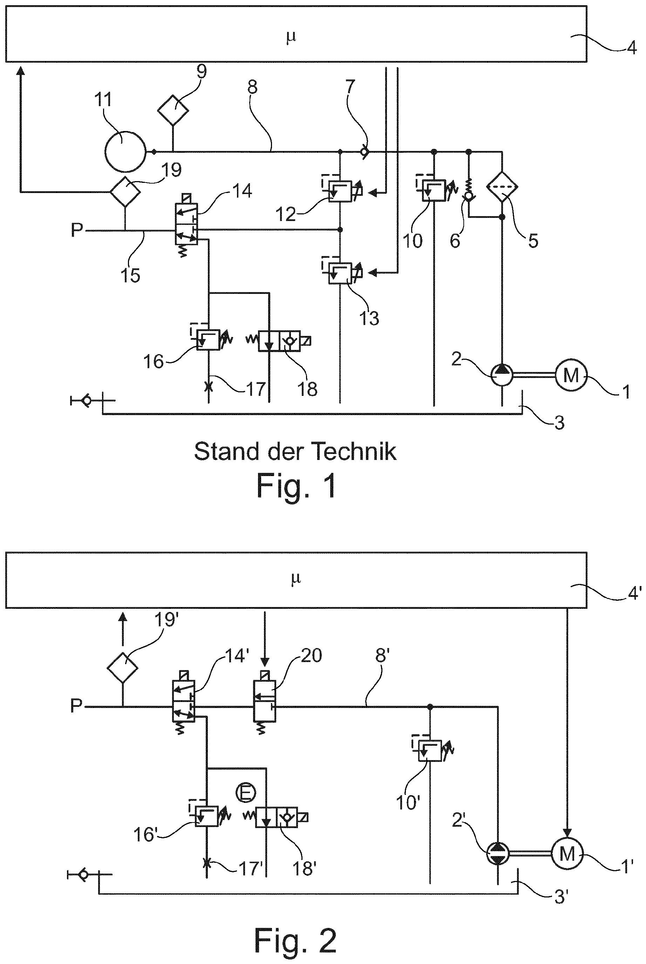

Aus dem allgemeinen bekannten Stand der Technik, welcher hier in der Fig. 1 hinsichtlich eines konventionellen hydraulischen Bremssystems der hier interessierenden Art illustriert ist, übernimmt eine von einem Elektromotor 1 angetriebene Hydraulikpumpe 2 eine hydraulische Druckerzeugung ausgehend von einem Tank 3 zur Bevorratung von Hydraulikflüssigkeit.

Über eine elektronische Regeleinheit 4 erfolgt das binäre Ein- oder Ausschalten des Elektromotors 1. Der Elektromotor 1 wird von der elektronischen Regeleinheit 4 nur dann eingeschaltet, falls Speisedruck nachzufüllen ist. Der von der Hydraulikpumpe 2 erzeugte hydraulische Druck gelangt über einen Druckfilter 5 mit hierzu parallel geschaltetem Rückschlagventil 6 sowie einem nachfolgend in Reihe hierzu angeordnetem weiterem Rückschlagventil 7 zu einer Druckleitung 8. An die Druckleitung 8 ist weiterhin ein Druckgeber 9 für den Speicherdruck angeschlossen. Der Druckgeber 9 für den Speicherdruck meldet sein Messsignal an die elektronische Regeleinheit 4 zu Überwachungszwecken. An der gegenüberliegenden Anschlussseite des Rückschlagventils 7 ist die Druckleitung 8 mit einem auslassseitig in den Tank 3 einmündenden Druckbegrenzungsventil 10 versehen, um eine Höchstdruckbegrenzung zu realisieren. Ferner ist die Druckleitung 8 mit einem Öldruckspeicher 11 üblicherweise einem Membranspeicher verbunden.

Zur Druckerhöhung des Bremsdrucks P betätigt die elektronische Regeleinheit 4 nach Maßgabe einer Druckregelung das hier als Stellglied dienende Proportional-Druckregelventil 12. Zur Druckverminderung nach Maßgabe der Regelung betätigt die elektronische Regeleinheit 4 das hier ebenfalls als Stellglied dienende Proportional-Druckregelventil 13, welches auslassseitig in den Tank 3 ausmündet. Demgegenüber ist das für den Vollzug einer Druckerhöhung vorgesehene andere Proportional-Druckregelventil 12 einlassseitig mit der speisedruckführenden Druckleitung 8 verbunden.

Ferner ist in diesem herkömmlichen hydraulischen Bremssystem ein elektromagnetisch ansteuerbares Sicherheitsbremsventil 14 in die Bremsdruckleitung 15 integriert. Dieses wird unabhängig von der Regelung im Notfall bei einer Funktionsstörung betätigt, um ein sicheres Einbremsen der Bremse zu ermöglichen, indem der Druck in der Bremsdruckleitung 15 verringert wird. Insoweit ist der - nicht weiter dargestellte - Bremsaktuator nach Art eines Federspeicherzylinders ausgebildet. Das sichere Einbremsen der Bremse wird über ein Druckbegrenzungsventil 16 mit nachgeschalteter Sicherheitsbremsdüse 17 erfolgen, was ein dosiertes Notbremsen ermöglicht. Das Öffnen des Parkbremsventils 18 führt zu einem maximalen Druckabbau, um nach einer Sicherheitsbremsung die maximale Bremskraft zur Verfügung stellen zu können.

Der in der Bremsdruckleitung 15 anliegende Ist-Bremsdruck wird von einem Druckgeber 19 erfasst, um diesen als Ist-Wert der elektronischen Regeleinheit 4 für die vorstehend beschriebene Regelung zur Verfügung zu stellen.

Bei diesem konventionellen hydraulischen Bremssystem wird der Bremsdruck also über die beiden Proportional-Druckregelventile 12 und 13 als Stellglieder geregelt, wobei die Regelung des Bremsdrucks mittels kontinuierlicher Messung desselben über den Druckgeber 19 sowie einem Ausgleich der Regelabweichung per Druckerhöhung oder Druckverminderung durch entsprechende Ansteuerung der Druckbegrenzungsventile 12 oder 13 als Stellglieder erfolgt.

Die Hydraulikpumpe 2 dient durch den getakteten Betrieb lediglich der Speisedruckerzeugung. Hierzu wird der Elektromotor 1 zum Antrieb der Hydraulikpumpe 2 üblicherweise mit einer bestimmten Drehrichtung sowie Richtung des Drehmoments betrieben.

Es ist die Aufgabe der vorliegenden Erfindung, ein hydraulisches Bremssystem der gattungsgemäßen Art dahingehend weiter zu verbessern, dass der ventiltechnische Aufwand reduziert wird.

Die Aufgabe wird ausgehend von einem hydraulischen Bremssystem gemäß dem Oberbegriff von Anspruch 1 in Verbindung mit dessen kennzeichnenden Merkmalen gelöst. Verfahrenstechnisch wird die Aufgabe durch Anspruch 8 gelöst. Der Anspruch 10 gibt ein dieses Verfahren umsetzendes Computerprogrammprodukt an.

Die Erfindung schließt die technische Lehre ein, dass unter Verzicht auf ventiltechnische Stellglieder die elektronische Regeleinheit den erfindungsgemäß als Stellglied dienenden Elektromotor zum Ausgleich der Regelabweichung derart ansteuert, dass die Hydraulikpumpe in einer Drehrichtung einer Druckerhöhung des Bremsdrucks und in der anderen Drehrichtung eine Druckverminderung des Bremsdrucks herbeiführt.

Die erfindungsgemäße Lösung basiert auf der Erkenntnis, dass nachdem aus dem Speisedruck alleinig der Arbeitsdruck zur Bremskrafterzeugung abgeleitet wird und es sich bei der Hydraulikflüssigkeit um ein inkompressibles Medium handelt, die Regelung des Bremsdrucks direkt über eine geeignete Ansteuerung des Elektromotors erfolgen kann. Vorteilhafterweise entfallen somit ansonsten übliche Druckregelventile und ein zusätzlicher Druckspeicher ist ebenfalls nicht erforderlich. Durch den vereinfachten technischen Aufbau entfallen weiterhin auch Teile der hydraulischen Verrohrung. Versuche haben ergeben, dass bei einer Speisung von beispielhaft zwei 32 kN-Bremskrafterzeugern mit je 23 cm³ Arbeitsvolumen ohne Druckspeicher Lösezeiten im Bereich von 180 ms erreichbar sind. Es konnten ferner zuverlässige stationäre Regelgenauigkeiten ohne Überschwingen beim Einregeln erzielt werden.

Zur Erzielung einer hohen Regelgenauigkeit wird empfohlen, die Hydraulikpumpe als eine Zahnradpumpe auszubilden. Der Elektromotor sollte zur Erzielung einer kompakten Bauweise vorzugsweise als ein Außenläufermotor ausgebildet sein, bei dem vorzugsweise ein Permanentmagnetring als Rotor außen laufend angeordnet ist. Als Elektromotor wird vorzugsweise ein elektrischer permanent erregter Synchronmotor verwendet.

Gemäß einer die Erfindung weiter verbessernden Maßnahme wird vorgeschlagen, dass in die von der Hydraulikpumpe beaufschlagten bremsdruckführenden Druckleitung ein von der elektronischen Regeleinheit angesteuertes Absperrventil eingefügt ist, um zusätzlich zu der direkt von der Hydraulikpumpe bewirkten Druckerhöhung und Druckverminderung eine Sperrstellung zu realisieren.

Ferner wird vorgeschlagen, in die bremsdruckführende Druckleitung ein Sicherheitsbremsventil zum sicher Einbremsen der Bremse im Falle einer Funktionsstörung einzufügen. Falls beispielsweise die Hydraulikpumpe blockiert, kann außerhalb der im Normalbetrieb eingesetzten Regelung durch Betätigung des Sicherheitsbremsventils ein sicheres Einbremsen der Bremse durchgeführt werden, um insbesondere auch bei einer Fehlfunktion der elektronischen Steuerung ein sicheres Bremsen zu gewährleisten.

Im Rahmen der erfindungsgemäßen Lösung ist vorzugsweise vorgesehen, dass auslassseitig des Absperrventils ein Druckgeber zum Messen des Ist-Bremsdrucks an die bremsdruckführende Druckleitung angeschlossen ist. Dieser Druckgeber ist zur IstWertvorgabe elektrisch an die elektronische Regeleinheit angeschlossen.

Vorzugsweise wird der Elektromotor durch die elektronische Regeleinheit hinsichtlich einer positiven und negativen Drehzahl sowie hinsichtlich eines positiven und negativen Drehmoments geregelt. Es findet also eine Ansteuerung des Elektromotors und dessen Betrieb in allen vier Quadranten des Drehzahl-Moment-Koordinatensystems statt. Dabei bewirkt eine positive Drehzahl des Elektromotors eine Druckerhöhung des Bremsdrucks. Eine negative Drehzahl des Elektromotors bewirkt eine Druckverminderung des Bremsdrucks. Mit einem ansteigend positiven Drehmoment wird die Bremsdruckerzeugung beschleunigt und mit einem abfallend negativen Drehmoment wird die Bremsdruckerzeugung verzögert.

Im Rahmen der erfindungsgemäßen Lösung lässt sich diese Ansteuerung in Form eines Computerprogrammprodukts umsetzen, dessen Programmcodemittel zur Durchführung des Regelverfahrens dient, wenn das Computerprogrammprodukt auf der elektronischen Regeleinheit des hydraulischen Bremssystems abläuft. Daneben ist auch eine Abspeicherung der Programmcodemittel auf einem computerlesbaren Medium möglich.

Weitere die Erfindung verbessernde Maßnahmen werden nachfolgend gemeinsam mit der Beschreibung eines bevorzugten Ausführungsbeispiels der Erfindung anhand der Zeichnung näher dargestellt. Es zeigt:
- Fig. 1: einen Schaltplan eines konventionellen hydraulischen Bremssystems gemäß des Standes der Technik, von dem die Erfindung ausgeht, und
- Fig. 2: einen Schaltplan eines erfindungsgemäßen hydraulischen Bremssystems mit einem als Stellglied dienenden Elektromotor.

Die den Stand der Technik illustrierende Fig. 1 wurde bereits in der Beschreibungseinleitung erörtert.

Nach Fig. 2 umfasst das erfindungsgemäße hydraulische Bremssystem einen Elektromotor 1', welcher eine Hydraulikpumpe 2' in beide Drehrichtungen antreibt. Die Hydraulikpumpe 2' ist als Zahnradpumpe ausgebildet und entnimmt einlassseitig Hydraulikflüssigkeit aus einem Tank 3'. Auslassseitig der Hydraulikpumpe 2' ist eine bremsdruckführende Druckleitung 8' angeschlossen. Von der bremsdruckführenden Druckleitung 8' zweigt ein Druckbegrenzungsventil 10' zum Abführen eines Überdrucks in den Tank 3' ab.

Von einer elektronischen Regeleinheit 4' wird der Elektromotor 1' als Stellglied zum Ausgleich von Regelabweichungen derart angesteuert, dass die Hydraulikpumpe 2' in der einen Drehrichtung eine Druckerhöhung des Bremsdrucks in der bremsdruckführenden Druckleitung 8' bewirkt, wogegen in der anderen Drehrichtung eine Druckverminderung des Bremsdrucks herbeigeführt wird.

Weiterhin ist in die von der Hydraulikpumpe 2' beaufschlagten bremsdruckführenden Druckleitung 8' ein neben dem Elektromotor 1' ebenfalls von der elektronischen Regeleinheit 4' ansteuerbares Absperrventil 20 eingefügt. Mit dem Absperrventil 20 kann zusätzlich zu der direkt von der Hydraulikpumpe 2' bewirkten Druckerhöhung und Druckverminderung eine Sperrstellung realisiert werden.

Dem Absperrventil 20 ist ein Sicherheitsbremsventil 14' nachgeschaltet, welches ebenfalls in die bremsdruckführende Druckleitung 8' eingefügt ist. Das Sicherheitsbremsventil 14' dient dem sicheren Einbremsen der Bremse im Falle einer Funktionsstörung von Komponenten der Druckregelung. Wird das Sicherheitsbremsventil 14' unabhängig hiervon betätigt, so kann eine über den Öffnungsdruck des auslassseitig nachgeschalteten Druckbegrenzungsventils 16' unter diesem nachgeschalteten Drossel 17' bewirkte dosierte Bremsung eingeleitet werden. Parallel hierzu besteht auch die Möglichkeit, mittels eines ebenfalls auslassseitig des Löseventils 14' abzweigenden Parkbremsventil 18' nach einer Sicherheitsbremsung die volle Parkbremskraft einzuleiten. Das betätigte Parkbremsventil 18' umgeht insoweit die Funktion der dosierten Abbremsung des ansonsten wirksamen Druckbegrenzungsventils 16'.

Im Übrigen misst ein Druckgeber 19' den Ist-Bremsdruck in der bremsdruckführenden Druckleitung 8' und gibt den Messwert an die elektronische Regeleinheit 4' zwecks IstWertvorgabe für die vorstehend beschriebene Regelung.

### Bezugszeichenliste

- 1: Elektromotor
- 2: Hydraulikpumpe
- 3: Tank
- 4: elektronische Regeleinheit
- 5: Druckfilter
- 6: Rückschlagventil
- 7: Rückschlagventil
- 8: Druckleitung
- 9: Druckgeber
- 10: Druckbegrenzungsventil
- 11: Öldruckspeicher
- 12: Proportional-Druckregelventil
- 13: Proportional-Druckregelventil
- 14: Sicherheitsbremsventil
- 15: Bremsdruckleitung
- 16: Druckbegrenzungsventil
- 17: Drossel
- 18: Parkbremsventil
- 19: Druckgeber
- 20: Absperrventil
- P: Bremsdruck

## Patentansprüche

1. Hydraulisches Bremssystem zum Bremsen eines Fahrzeugrades nach Maßgabe einer Bremsdruckregelung, umfassend:
- eine von einem Elektromotor (1; 1') angetriebene Hydraulikpumpe (2; 2') zur hydraulischen Druckerzeugung,
- eine elektronische Regeleinheit (4; 4') zur Ermittlung mindestens eines Steilwertes zum Ausgleich einer Regelabweichung, ausgehend von einem gemessenen Ist-Bremsdruck im Vergleich zu einer Soll-Druckvorgabe, welche
- mindestens ein Stellglied zur Druckerhöhung oder Druckverminderung des Ist-Bremsdrucks in Anpassung zur Soll-Druckvorgabe ansteuert,
**dadurch gekennzeichnet, dass** die elektronische Regeleinheit (4') den Elektromotor (1') als Stellglied zum Ausgleich der Regelabweichung derart ansteuert, dass die Hydraulikpumpe (2') in einer Drehrichtung eine Druckerhöhung des Bremsdrucks und in der anderen Drehrichtung eine Druckverminderung des Bremsdrucks erzeugt.

2. Hydraulisches Bremssystem nach Anspruch 1,
**dadurch gekennzeichnet, dass** die Hydraulikpumpe (2') als eine Zahnradpumpe ausgebildet ist.

3. Hydraulisches Bremssystem nach Anspruch 1,
**dadurch gekennzeichnet, dass** der Elektromotor (1') als permanent erregter Synchronmotor ausgebildet ist.

4. Hydraulisches Bremssystem nach Anspruch 3,
**dadurch gekennzeichnet, dass** der Elektromotor (1') als ein Außenläufermotor ausgebildet ist.

5. Hydraulisches Bremssystem nach Anspruch 1,
**dadurch gekennzeichnet, dass** in die von der Hydraulikpumpe (2') beaufschlagte bremsdruckführende Druckleitung (8') ein von der elektronischen Regeleinheit (4') angesteuertes Absperrventil (20) eingefügt ist, um zusätzlich zu der direkt von der Hydraulikpumpe (2') bewirkten Druckerhöhung und Druckverminderung eine Sperrstellung zu realisieren.

6. Hydraulisches Bremssystem nach Anspruch 1, **dadurch gekennzeichnet, dass** in die bremsdruckführende Druckleitung (8') ein Sicherheitsbremsvcntil (14') eingefügt ist, welches zusammen mit einem diesem nachgeschaltctcn Druckbegrenzungsventil (16') und einer dazu nachgeschalteten Drossel (17') ein sicheres Einbremsen der Bremse im Falle einer Funktionsstörung ermöglicht.

7. Hydraulisches Bremssystem nach Anspruch 6,
**dadurch gekennzeichnet, dass** auslassseitig des Absperrventils (20) ein Druckgeber (19') zum Messen des Ist-Bremsdrucks an die bremsdruckführende Druckleitung (8') angeschlossen ist, der elektrisch an die elektronische Regeleinheit (4') zur Istwertvorgabe angeschlossen ist.

8. Verfahren zum Bremsen mindestens eines Fahrzeugrades nach Maßgabe einer Bremsdruckregelung, bei welcher eine von einem Elektromotor (1') angetriebene Hydraulikpumpe (2') zur hydraulischen Druckerzeugung verwendet wird, und bei welcher von einer elektronischen Regeleinheit (4') mindestens ein Stellwert zum Ausgleich einer Regelabweichung ausgehend von einem gemessenen Ist-Bremsdruck im Vergleich zu einer Soll-Druckvorgabe ermittelt wird, um mindestens ein Stellglied zur Druckerhöhung oder Druckverminderung des Ist-Bremsdrucks in Anpassung zur Soll-Druckvorgabe anzusteuern, **dadurch gekennzeichnet, dass** von der elektronischen Regeleinheit (4') der Elektromotor (1') als Stellglied zum Ausgleich der Regelabweichung derart angesteuert wird, dass die Hydraulikpumpe (2') in einer Drehrichtung eine Druckerhöhung des Bremsdrucks und in der anderen Drehrichtung eine Druckverminderung des Bremsdrucks erzeugt.

9. Verfahren nach Anspruch 8,
**dadurch gekennzeichnet, dass** der Elektromotor (1') hinsichtlich einer positiven und negativen Drehzahl sowie eines positiven und negativen Drehmoments geregelt wird.

10. Computerprogrammprodukt mit Programmcodemitteln zur Durchführung des Verfahrens nach einem der Ansprüche 8 oder 9, wenn das Computerprogrammprodukt auf einer elektronischen Regeleinheit (4') eines hydraulischen Bremssystems nach einem der Ansprüche 1 bis 7 abläuft oder auf einem computerlesbaren Medium gespeichert ist.

## Claims

1. Hydraulic braking system for braking a vehicle wheel in accordance with a braking pressure control, comprising:
- a hydraulic pump (2: 2') driven by an electric motor (1: 1') for hydraulic pressure generation,
- an electronic control unit (4;4') for the determination of at least one control value for compensating a control error based on a measured actual braking pressure compared to a pressure demand setpoint, which
- controls at least one actuator for a pressure increase or a pressure reduction of the actual braking pressure when adjusting to the pressure demand setpoint,
**characterized in that** the electronic control unit (4') controls the electric motor (1') as an actuator to compensate the control error in such a way that in one direction of rotation the hydraulic pump (2') causes a pressure increase of the braking pressure and in the other direction of rotation causes a pressure reduction of the braking pressure.

2. Hydraulic braking system according to Claim 1,
**characterized in that** the hydraulic pump (2') is in the form of a gear pump.

3. Hydraulic braking system according to Claim 1,
**characterized in that** the electric motor (1') is in the form of a permanently excited synchronous motor.

4. Hydraulic braking system according to Claim 3,
**characterized in that** the electric motor (1') is in the form of an external rotor motor.

5. Hydraulic braking system according to Claim 1,
**characterized in that** a shut-off valve (20) controlled by the electronic control unit (4') is inserted into the pressure line (8') carrying the braking pressure supplied by the hydraulic pump (2') in order to implement a shut-off position in addition to the pressure increase and pressure reduction directly caused by the hydraulic pump (2').

6. Hydraulic braking system according to Claim 1,
**characterized in that** a safety brake valve (14') is inserted into the pressure line (8') carrying the braking pressure and, together with a pressure limiting valve (16') downstream therefrom and a choke (17') downstream from the latter, allows safe application of the brake in the event of a malfunction.

7. Hydraulic braking system according to Claim 6,
**characterized in that** a pressure encoder (19') for measuring the actual braking pressure is connected to the pressure line (8') carrying the braking pressure on the outlet-side of the shut-off valve (20), and is electrically connected to the electronic control unit (4') for actual value specification.

8. Method of braking at least one vehicle wheel in accordance with a braking pressure control system in which a hydraulic pump (2') driven by an electric motor (1') is used for hydraulic pressure generation, and in which at least one control value for compensating a control error is determined by an electronic control unit (4') based on a measured actual braking pressure in comparison with a pressure demand setpoint in order to control at least one actuator for a pressure increase or a pressure reduction of the actual braking pressure when adjusting to the pressure demand setpoint,
**characterized in that** the electric motor (1') is controlled as an actuator by the electronic control unit (4') to compensate for the control error in such a way that in one direction of rotation the hydraulic pump (2') generates a pressure increase in the braking pressure and in the other direction of rotation generates a pressure reduction of the braking pressure.

9. Method according to Claim 8,
**characterized in that** the electric motor (1') is controlled with regard to a positive and negative speed as well as a positive and negative torque.

10. Computer program product with program code means for carrying out the procedure according to any one of Claims 8 or 9 when the computer program product is run on an electronic control unit (4') of a hydraulic braking system according to one of Claims 1 to 7 or is stored on a computer-readable medium.

## Revendications

1. Système hydraulique de frein pour freiner une roue de véhicule selon une régulation de la pression de frein, comprenant :
- une pompe (2 ; 2') hydraulique entraînée par un moteur (1 ; 1') électrique afin de produire la pression hydraulique,
- une unité (4; 4') électronique de régulation pour la détermination d'au moins une valeur de réglage afin de compenser un écart de réglage, à partir d'une pression de frein réelle mesurée en comparaison d'une prescription de pression de consigne, qui
- commande au moins un élément de réglage d'élévation de la pression ou d'abaissement de la pression de frein réelle en adaptation à la prescription de pression de consigne,
**caractérisée en ce que** l'unité (4') électronique de régulation commande le moteur (1') électrique en tant qu'élément de réglage pour la compensation de l'écart de réglage de manière à ce que la pompe (2') hydraulique produise dans un sens de rotation une élévation de la pression de frein et dans l'autre sens de rotation un abaissement de la pression de frein.

2. Système hydraulique de freins suivant la revendication 1, **caractérisé en ce que** la pompe (2') hydraulique est une pompe à engrenage.

3. Système hydraulique de freins suivant la revendication 1, **caractérisé en ce que** le moteur (1') électrique est constitué sous la forme d'un moteur synchrone à excitation permanente.

4. Système hydraulique de freins suivant la revendication 3, **caractérisé en ce que** le moteur (1') électrique est constitué sous la forme d'un moteur à rotor extérieur.

5. Système hydraulique de frein suivant la revendication 1, **caractérisé en ce que** dans le conduit (8') de refoulement de la pompe (2') hydraulique donnant la pression de frein est inséré un robinet (20) d'arrêt commandé par l'unité (4') électronique de régulation, pour réaliser une position d'arrêt supplémentairement à l'élévation de pression et à l'abaissement de pression provoqué directement par la pompe (2') hydraulique.

6. Système hydraulique de frein suivant la revendication 1, **caractérisé en ce que** dans le conduit (8') de refoulement donnant la pression de frein, est inséré un robinet (14') de frein de sécurité, qui ensemble avec une soupape (16') de limitation de la pression montée en aval de celui-ci et un étranglement (17') monté en aval rend possible un serrage sûr du frein dans le cas d'une panne de fonctionnement.

7. Système hydraulique de frein suivant la revendication 6, **caractérisé en ce que** du côté de la sortie du robinet (20) d'arrêt est raccordée une sonde (19') de pression pour la mesure de la pression de frein réelle sur le conduit (8') de refoulement donnant la pression de frein, sonde qui est raccordée électriquement à l'unité (4') électronique de régulation pour la prescription de la valeur réelle.

8. Procédé de freinage d'au moins une roue de véhicule selon une régulation de la pression de frein, dans lequel on utilise pour la production de la pression hydraulique une pompe (2') hydraulique entraînée par un moteur (1') électrique et dans lequel on détermine par une unité (4') électronique de régulation au moins une valeur de réglage pour la compensation d'un écart de réglage à partir d'une pression de frein réelle mesurée en comparaison d'une prescription de pression de consigne, pour commander au moins un élément de réglage d'élévation de la pression ou d'abaissement de la pression de frein réelle, en adaptation à la prescription de pression de consigne,
**caractérisé en ce que** l'on commande par l'unité (4') de régulation le moteur (1') électrique comme élément de réglage pour la compensation de l'écart de réglage de manière à ce que la pompe (2') hydraulique produise, dans un sens de rotation, une élévation de la pression de frein et, dans l'autre sens de rotation, un abaissement de la pression de frein.

9. Procédé suivant la revendication 8,
**caractérisé en ce que** l'on régule le moteur (1') électrique du point de vue d'une vitesse de rotation positive et négative, ainsi que d'un couple positif et négatif.

10. Produit de programme d'ordinateur ayant des moyens de code de programme pour effectuer le procédé suivant l'une des revendications 8 ou 9, lorsque le produit de programme d'ordinateur se déroule sur une unité (4') électronique de régulation d'un système hydraulique de frein suivant l'une des revendications 1 à 7 ou est mise en mémoire sur une mémoire déchiffrable par ordinateur.
